# EUROPEAN PATENT APPLICATION

(11) **EP 4 700 858 A1**
(43) Date of publication of application: **25.02.2026**
(21) Application number: 23933669.6
(22) Date of filing: 16.08.2023
(51) Int. Cl.: H01M 4/36, H01M 10/0525, H01G 11/30

(54) **HIGH-PERFORMANCE POSITIVE ELECTRODE MATERIAL, AND PREPARATION METHOD THEREFOR AND USE THEREOF**

(30) Priority: 19.04.2023 CN 202310426149
(71) Applicant: Tianmulake Excellent Anode Materials Co, Ltd., Liyang, Jiangsu 213330 (CN)
(72) Inventor: WANG, Jing, Liyang, Jiangsu 213300 (CN); LIU, Bonan, Liyang, Jiangsu 213300 (CN); YIN, Yingying, Liyang, Jiangsu 213300 (CN); LUO, Fei, Liyang, Jiangsu 213300 (CN)
(74) Representative: Glück Kritzenberger Patentanwälte PartGmbB
(86) International application number: PCT/CN2023/113243
(87) International publication number: WO 2024/216797

(57) **Abstract**

The present invention relates to a high-performance positive electrode material, and a preparation method therefor and the use tthereof. The positive electrode material comprises: porous materials, lithium-containing compounds, metal nanoparticles, and positive electrode active materials; wherein the lithium-containing compounds comprise inorganic lithium source materials and/or organic lithium source materials; and the metal nanoparticles comprise one or more of : Al, Ti, Mn, Co, Ni, Cu, Zn, Zr, Mo, Ge, and Sn.

## Description

### CROSS-REFERENCE TO RELATED APPLICATION

This application claims priority for Chinese patent application No. 202310426149.5, entitled "HIGH-PERFORMANCE POSITIVE ELECTRODE MATERIAL, AND PREPARATION METHOD THEREFOR AND USE THEREOF", filed with China National Intellectual Property Administration on April 19, 2023.

### BACKGROUND OF THE INVENTION

### 1. Technical Field

The present invention relates to the technical field of lithium battery materials, in particular to a high-performance positive electrode material, and a preparation method therefor and use thereof.

### 2. Description of Related Art

With the swift advancement of the green low-carbon industry in China, the penetration rate of new energy vehicles is increasing, and energy storage batteries are experiencing rapid growth. Lithium batteries possess advantages such as high voltage, large capacity, high energy density, no memory effect, long lifespan, and environmental friendliness, making them the preferred choice for rechargeable power sources in modern portable electronics and new energy vehicles.

To fulfill the current development needs, electrode materials with high energy density and high specific capacity have become the main focus for battery enterprises. Silicon-based materials in negative electrodes, due to their abundant supply and ultra-high theoretical specific capacity, have become the preferred choice for battery companies and are among the most promising next-generation anode materials for lithium-ion batteries.

However, the problem of low initial Coulombic efficiency becomes more pronounced when using silicon negative electrodes. This is primarily due to the significant expansion of silicon, which keeps the solid electrolyte interphase (SEI) membrane on the silicon surface in a continuous "destruction-reconstruction" dynamic process, ultimately leading to an increase in SEI membrane thickness, higher interfacial resistance, and consumption of active materials, resulting in capacity decay and reduced initial efficiency. Therefore, to ensure the capacity of batteries, it is necessary to replenish the lost lithium and extend the cycle life of lithium batteries.

Currently, many companies are utilizing lithium supplementation technology for anodes. The methods generally include pre-lithiation of silicon-based negative electrodematerials using metallic lithium powder, electrochemical pre-lithiation, and direct contact short-circuit methods, which are simple and effective. However, these methods have high environmental requirements, such as an oxygen-free, moisture-free, and dry setting. The lithium supplementation process using metallic lithium has very stringent demands on the production environment, requiring closed mixing equipment, and the costs are high, making large-scale application challenging.

Therefore, finding a safe, low-cost, and simple method to supplement lithium in order to improve overall battery capacity and cycle life is something that leading battery manufacturers and battery material companies are actively investigating and seeking technological advancements.

### BRIEF SUMMARY OF THE INVENTION

The present invention aims to provide a high-performance positive electrode material, and a preparation method therefor and use thereof. By utilizing doped nano-metal elements to catalyze lithium-containing compounds that are normally inert at room temperature during the charging and discharging process, lithium ions can be completely released, thereby increasing the energy density of batteries. Additionally, the gases produced from the complete catalytic decomposition of the lithium-containing compounds are expelled during battery formation, which addresses the gas generation issue during normal battery operation and enhances the safety performance of batteries. Furthermore, the doped metal elements and porous materials can accelerate the internal conduction rate of lithium ions and improve the conductivity of the positive electrode material, ultimately achieving the goal of enhancing overall battery capacity and cycle life through a safe, low-cost, and simple process.

In a first aspect, an embodiment of the invention provides a high-performance positive electrode material. The positive electrode material is used in lithium batteries and comprises: porous materials, lithium-containing compounds, metal element nanoparticles, and positive electrode active materials;
the lithium-containing compounds comprise inorganic lithium source materials and/or organic lithium source materials; the inorganic lithium source materials comprise one or more of the following: lithium carbonate, lithium oxide, lithium phosphate, lithium manganate, lithium hydroxide, or lithium iodide; the organic lithium source materials comprise one or more of the following: butyllithium, phenyllithium, dicyclopentadienyllithium, or lithium acetate;
the metal element nanoparticles comprise one or more of the following elements and/or alloys thereof: Al, Ti, Mn, Co, Ni, Cu, Zn, Zr, Mo, Ge, and Sn; a particle size Dᵥ₁₀₀ is smaller than or equal to 500 nm;
during the initial cycle of charging and discharging in lithium batteries, reactive active sites on a surface of the metal element nanoparticles adsorb the inert lithium-containing compounds, causing deformation or breaking of chemical bonds in the lithium-containing materials, which results in a catalytic effect on the lithium-containing compounds; additionally, a specific surface area of the metal element nanoparticles provides active centers for electrocatalytic reactions, enhancing the catalytic effect and collectively promoting complete decomposition of the lithium-containing compounds to release lithium ions, thereby improving the energy density and safety performance of lithium batteries.

Preferably, an average particle size Dᵥ₅₀ of the porous materials is between 100 nm and 100 µm, with pore size distribution between 1 nm and 500 nm, and porosity ranging from 30% to 95%;
a particle size D₅₀ of the lithium-containing compounds is between 0.5 nm and 10 µm; and
a particle size D_{V50} of the positive electrode active materials is between 5µm and 20 µm.

Preferably, the porous materials comprise one or more of the following: porous carbon, graphene microspheres, single-walled carbon nanotubes, and multi-walled carbon nanotubes; and
the positive electrode active materials comprise one or more of the following: lithium cobalt oxide, lithium manganese oxide, lithium iron phosphate, lithium nickel cobalt manganese oxide, or lithium nickel cobalt aluminum oxide.

Preferably, a mass of the positive electrode active materials accounts for 80%-99.9% of a total mass of the positive electrode material; and
a total mass of the porous materials, the lithium-containing compounds, and the metal element nanoparticles accounts for 0.1%-20% of the total mass of the positive electrode material.

Preferably, the mass of the positive electrode active materials accounts for 70%-94% of the total mass of the positive electrode material;
the total mass of the porous materials, the lithium-containing compounds, and the metal element nanoparticles accounts for 6%-30% of the total mass of the positive electrode material;
wherein, the porous materials account for 0.5%-15% of the total mass of the positive electrode material, the metal element nanoparticles account for 0.5%-10% of the total mass of the positive electrode material, and the lithium-containing compounds account for 5%-20% of the total mass of the positive electrode material.

In a second aspect, an embodiment of the invention provides a preparation method of the high-performance positive electrode material as described in the first aspect, which is a liquid-phase method, comprising:
uniformly dispersing metal element nanoparticles and lithium-containing compounds in organic solvents to obtain a premixed solution;
adding porous materials to the premixed solution and performing thorough and uniform dispersion for 2-10 hours to obtain a mixed solution;
placing the mixed solution in high-temperature furnaces, heating to 600°C-1000°C in an inert atmosphere, maintaining the temperature for 2-10 hours, and then crushing and screening discharged materials to obtain a precursor material; and
placing the precursor material and positive electrode active materials in mixing devices and mixing for 0.5-5 hours until uniformly mixed to obtain the high-performance positive electrode material.

Preferably, the organic solvents comprise one or more of the following: toluene, isopropanol, anhydrous ethanol, dimethylformamide, acetone, glycol dimethyl ether, or tetrahydrofuran.

Preferably, the mixing devices comprise one or more of the following: stirrer, disperser, ball mill, or ultrasonic machine; and
the heating furnaces comprise one or more of the following: box-type heating furnace, tube heating furnace, or rotary furnace.

In a third aspect, an embodiment of the present invention provides a positive plate which comprises the high-performance positive electrode material as described in the first aspect.

In a fourth aspect, an embodiment of the present invention provides a lithium battery which comprises the positive plate as described in the third aspect.

According to the high-performance positive electrode material provided by the embodiments of the present invention, by utilizing doped nano-metal elements to catalyze lithium-containing compounds that are normally inert at room temperature during the charging and discharging process, lithium ions can be completely released, thereby increasing the energy density of batteries. Additionally, the gases produced from the complete catalytic decomposition of the lithium-containing compounds are expelled during battery formation, which addresses the gas generation issue during normal battery operation and enhances the safety performance of batteries. Furthermore, the doped metal elements and porous materials can accelerate the internal conduction rate of lithium ions and improve the conductivity of the positive electrode material, ultimately achieving the goal of enhancing overall battery capacity and cycle life through a safe, low-cost, and simple process.

### BRIEF DESCRIPTION OF THE SEVERAL VIEWS OF THE DRAWINGS

Fig. 1 is a flowchart of a preparation method of a high-performance positive electrode material according to an embodiment of the present invention.
Fig. 2 illustrates cycling curves of batteries assembled with a high-performance positive electrode material prepared in Embodiment 1 of the present invention, in contrast to batteries assembled with a positive electrode material prepared in Comparative example 2.

### DETAILED DESCRIPTION OF THE INVENTION

The present invention will be further explained below by referring to drawings and specific embodiments, but it should be understood that these embodiments are only for more detailed explanation, and should not be construed as limiting the present invention in any way, that is, not intended to limit the scope of protection of the present invention.

An embodiment of the present invention provides a high-performance positive electrode material, comprising: porous materials, lithium-containing compounds, metal element nanoparticles, and positive electrode active materials;
the lithium-containing compounds comprise inorganic lithium source materials and/or organic lithium source materials; the inorganic lithium source materials comprise one or more of the following: lithium carbonate, lithium oxide, lithium phosphate, lithium manganate, lithium hydroxide, or lithium iodide; the organic lithium source materials comprise one or more of the following: butyllithium, phenyllithium, dicyclopentadienyllithium, or lithium acetate; a particle size D₅₀ of the lithium-containing compounds is 0.5 nm-10 µm;
the metal element nanoparticles comprise one or more of the following elements and/or alloys thereof: Al, Ti, Mn, Co, Ni, Cu, Zn, Zr, Mo, Ge, and Sn; a particle size Dᵥ₁₀₀ is smaller than or equal to 500 nm;
during the initial cycle of charging and discharging in lithium batteries, reactive active sites on a surface of the metal element nanoparticles adsorb the inert lithium-containing compounds, causing deformation or breaking of chemical bonds in the lithium-containing materials, which results in a catalytic effect on the lithium-containing compounds, promoting decomposition of the lithium-containing compounds to release lithium ions, thereby improving the initial cycling efficiency of lithium batteries.

The porous materials comprise one or more of the following: porous carbon, graphene microspheres, single-walled carbon nanotubes, and multi-walled carbon nanotubes; and an average particle size Dᵥ₅₀ is between 100 nm and 100 µm, with pore size distribution between 1 nm and 500 nm, and porosity ranging from 30% to 95%.

The positive electrode active materials comprise one or more of the following: lithium cobalt oxide, lithium manganese oxide, lithium iron phosphate, lithium nickel cobalt manganese oxide, or lithium nickel cobalt aluminum oxide; and a particle size DV50 of the positive electrode active materials is between 5µm and 20 µm.

In the above material, a total mass of the porous materials, the lithium-containing compounds, and the metal element nanoparticles accounts for 0.1%-20% of a total mass of the positive electrode material; and a mass of the positive electrode active materials accounts for 80%-99.9% of the total mass of the positive electrode material.

Preferably, the total mass of the porous materials, the lithium-containing compounds, and the metal element nanoparticles accounts for 6%-30% of the total mass of the positive electrode material; the mass of the positive electrode active materials accounts for 70%-94% of the total mass of the positive electrode material;
in a preferred solution, the porous materials account for 0.5%-15% of the total mass of the positive electrode material, the metal element nanoparticles account for 0.5%-10% of the total mass of the positive electrode material, and the lithium-containing compounds account for 5%-20% of the total mass of the positive electrode material.

More preferably, the porous materials account for 0.5%-15% of the total mass of the positive electrode material, the metal element nanoparticles account for 2%-8% of the total mass of the positive electrode material, and the lithium-containing compounds account for 7%-15% of the total mass of the positive electrode material.

During the initial cycle of charging and discharging in lithium batteries, the elemental metals and/or alloys can catalyze the lithium-containing compounds, promoting their decomposition to release lithium ions, and thus improving the initial cycling efficiency of lithium batteries. This is because the elemental metals and/or alloys used in the invention are transition elemental metals and/or alloys, which, except for Cu, have unfilled d-electron shells in their penultimate layers, resulting in d-holes. For Cu, under charge-discharge conditions, the adjacent S-orbitals are not fully filled with electrons, causing d-electrons to transition to the S-orbitals and form d-holes. On the surfaces of transition metal elements, active sites are typically associated with d-electron-dense d-orbitals and d-holes. These d-orbitals and d-holes can form coordination bonds with groups in molecules, thereby promoting reactions and exhibiting strong catalytic effects. d% is commonly used to represent the proportion of d-electrons in transition metal atoms within a compound or material. The d% has a significant impact on the reactivity and adsorption capacity of metal surfaces, as the reactivity of metal surfaces is closely related to their electronic structure. On the one hand, d-electrons on the metal surface are often more prone to participating in chemical reactions because they are closer to the metal surface and more susceptible to influence from external substances compared to other electrons. Consequently, the greater the number of d-electrons on the metal surface, the stronger the reactivity of the metal surface tends to be. On the other hand, d-electrons may also affect chemical adsorption on the metal surface. The d-holes on the transition metal surface can make molecules on the surface easier to adsorb because they can form coordination bonds with the d-holes. Therefore, the number of d-holes may also influence the adsorption capacity of molecules on metal surfaces. Thus, during the initial charging and discharging process, the active sites on the surface of metal elements are utilized to catalyze the release of lithium ions from lithium-containing compounds.

Under the charging and discharging voltage in the initial cycle, the reactive sites on the metal surface can adsorb lithium-containing compounds that are inherently inert, causing deformation or rupture of the chemical bonds within the lithium-containing compounds. This accelerates charge transfer between the catalyst (metal) and the adsorbate (lithium-containing compound). Additionally, due to the large specific surface area of nanoparticles, they possess numerous active centers for electrocatalytic reactions, significantly enhancing the catalytic effect. Consequently, this achieves activation of the lithium-containing compounds and complete release of active lithium ions.

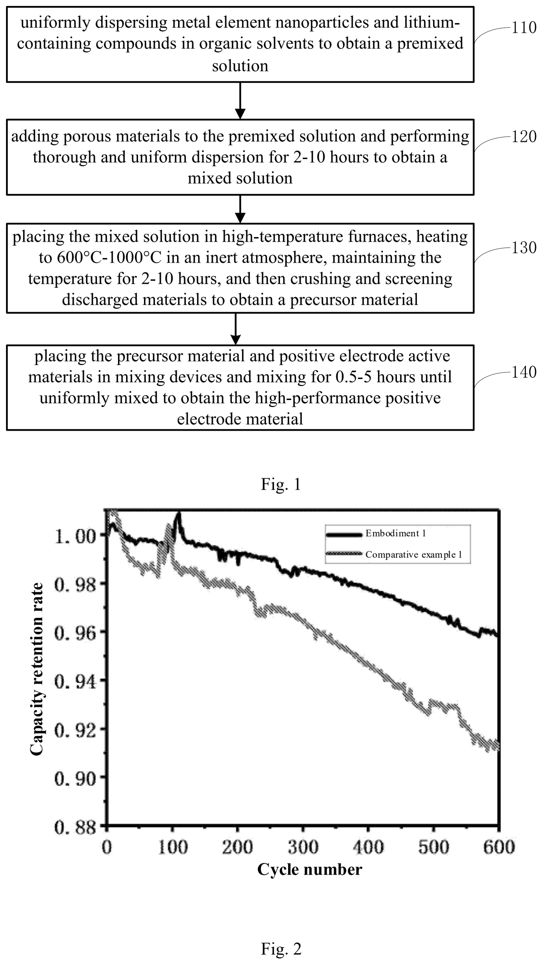

The high-performance positive electrode material according to the above embodiment of the invention can be prepared by the liquid-phase method shown in Fig. 1, comprising the following steps:
step 110, uniformly dispersing metal element nanoparticles and lithium-containing compounds in organic solvents to obtain a premixed solution;
   where the organic solvents comprise one or more of the following: toluene, isopropanol, anhydrous ethanol, dimethylformamide, acetone, glycol dimethyl ether, or tetrahydrofuran;
step 120, adding porous materials to the premixed solution and performing thorough and uniform dispersion for 2-10 hours to obtain a mixed solution;
step 130, placing the mixed solution in high-temperature furnaces, heating to 600°C-1000°C in an inert atmosphere, maintaining the temperature for 2-10 hours, and then crushing and screening discharged materials to obtain a precursor material;
   where the heating furnaces comprise one or more of the following: box-type heating furnace, tube heating furnace, or rotary furnace; and
step 140, placing the precursor material and positive electrode active materials in mixing devices and mixing for 0.5-5 hours until uniformly mixed to obtain the high-performance positive electrode material;
   where the mixing devices comprise one or more of the following: stirrer, disperser, ball mill, or ultrasonic machine.

The high-performance positive electrode material according to the embodiment of the invention can be used as a positive electrode active material in a positive plate, and the positive plate can be applied to lithium batteries.

In order to better understand the technical solution provided by the present invention, the preparation process and characteristics of the high-performance positive electrode material are described below with several specific examples.

### Embodiment 1

This embodiment provides a preparation process and performance test for a high-performance positive electrode material. The preparation process specifically comprises the following steps:
(1) placing 20 g of copper powder and 50 g of lithium carbonate into an anhydrous ethanol solution, dispersing the mixture in a disperser at a speed of 1500 r/min, and stirring thoroughly at room temperature for 8 hours to obtain a premixed solution, the Dᵥ₁₀₀ of the copper powder being 205 nm;
(2) adding 15 g of porous carbon to the premixed solution, continuing to disperse evenly in the disperser at a speed of 2000 r/min, and stirring at room temperature for another 8 h to obtain a mixed solution;
(3) placing the mixed solution in a box-type heating furnace, heating to 800°C in an argon atmosphere, maintaining the temperature for 6 hours, and then crushing and screening discharged materials to obtain a precursor material; and
(4) continuing to evenly disperse 2 kg of lithium iron phosphate with the precursor material in the disperser at a speed of 1300 r/min, and stirring at room temperature for another 3 hours to obtain the high-performance positive electrode material.

The high-performance positive electrode material prepared by this embodiment was used to prepare positive plates, and button half-cells and full-cells were assembled and tested.

Preparation method and testing of button half-cells: The resulting high-performance positive electrode material, the conductive additive carbon black, and the binder polyvinylidene fluoride (PVDF) were weighed in a mass ratio of 96%:2%:2%, and the mixture was prepared into a slurry using a pulper, followed by coating, drying, and cutting into sheets. In a glove box, these sheets were assembled with lithium foils to form batteries. A constant current charge-discharge mode test was carried out by using a charge-discharge instrument. The discharge cut-off voltage was 2.5 V and the charge cut-off voltage was 3.65 V. The initial-cycle charge-discharge test was conducted at a current density of 0.1 C. The initial efficiency and reversible capacity test data for the button cells are shown in Table 1.

### Preparation method and testing of full-cells:

Preparation of negative electrode plates: A silicon-oxide negative electrode material with a carbon coating was combined with graphite to form a composite with a specific capacity of 450 mAh/g, which was then mixed with the conductive additive carbon black and the binder polyvinylidene fluoride (PVDF) in a ratio of 95%:2%:3%. At room temperature, the mixture and a solvent were placed in a pulper to produce a slurry. The resulting slurry was evenly coated onto copper foil at a coating speed of 2.2-3.5 m/min, with the drying track temperature of a coating machine set between 70°C and 100°C. After double-sided drying in the coating machine, the negative electrode plates were obtained.

Preparation of positive plates: The high-performance positive electrode material, a conductive additive, and a binder were weighed and mixed in a ratio of 96%:2%:2%. At room temperature, the mixture and the solvent N-methylpyrrolidone were placed in a pulper to prepare a slurry. The prepared slurry was evenly coated onto aluminum foil at a coating speed of 2.0-3.0 m/min, with the drying track temperature of a coating machine set between 90°C and 120°C. After double-sided coating and drying in the coating machine, the positive plates were obtained.

Preparation of batteries: A positive electrode of a positive plate used an aluminum tab as the exposed terminal, while a negative electrode of a negative plate used a nickel-plated copper tab as the exposed terminal. The prepared positive and negative plates, along with a separator, were wound together to form a naked cell. This cell was then sealed using an aluminum-plastic film through a thermal sealing process. The cell underwent high-temperature vacuum baking to remove moisture, followed by the injection of 1 molar electrolyte. The electrolyte was a mixed solution of LiPF₆ with ethylene carbonate/dimethyl carbonate (EC/DMC). After sealing under vacuum, full-cells were obtained.

Testing: A constant current charge-discharge mode test was carried out on the prepared full-cells by using a charge-discharge instrument. The discharge cut-off voltage was 2.5 V and the charge cut-off voltage was 3.65 V. The discharge tests after the initial cycle were conducted at a current density of 1 C.

The test results for initial efficiency, reversible capacity at 0.1 C, and cycle retention rate at 1 C after 300 and 600 cycles of the full-cells prepared in this embodiment are detailed in Table 1.

### Embodiment 2

This embodiment provides a preparation process and performance test for a high-performance positive electrode material. The preparation process comprises :
(1) placing 13 g of aluminum powder and 68 g of lithium oxide in an isopropanol solution, and putting the mixture in a ball mill set to rotate at 1000 r/min, alternating between forward and reverse rotations, ball milling at room temperature for 10 hours , to obtain a premixed solution, the Dᵥ₁₀₀ of the aluminum powder being 228 nm;
(2) adding 24 g of single-walled carbon nanotubes to the premixed solution, continuing to disperse evenly in the ball mill at a speed of 1600 r/min, and stirring at room temperature for another 8 hours to obtain a mixed solution;
(3) placing the mixed solution in a rotary furnace, heating to 700°C in an argon atmosphere, maintaining the temperature for 8 hours, and then crushing and screening discharged materials to obtain a precursor material; and
(4) continuing to evenly disperse 2 kg of lithium iron phosphate with the precursor material in the ball mill at a speed of 800 r/min, and stirring at room temperature for another 2.5 h to obtain the high-performance positive electrode material.

The high-performance positive electrode material prepared by this embodiment was used to prepare positive plates, and button half-cells and full-cells were assembled and tested. The specific processes were the same as in Embodiment 1. The test data are recorded in Table 1.

### Embodiment 3

This embodiment provides a preparation process and performance test for a high-performance positive electrode material. The preparation process comprises :
(1) placing 37 g of zinc powder with 137 g of lithium phosphate in a toluene solution, and putting the mixture in an ultrasonic machine with an ultrasonic frequency of 50 kHz, yielding a premixed solution after 9 hours of ultrasonic stirring, the Dᵥ₁₀₀ of the zinc powder being 138 nm;
(2) adding 56 g of multi-walled carbon nanotubes to the premixed solution, and continuing to stir in the ultrasonic machine with the ultrasonic frequency set at 70 kHz, yielding a mixed solution after 3 hours of ultrasonic stirring;
(3) placing the mixed solution in a rotary furnace, heating to 900°C in an argon atmosphere, maintaining the temperature for 3 hours, and then crushing and screening after discharging the materials to obtain a precursor material; and
(4) continuing to evenly disperse 2 kg of lithium iron phosphate with the precursor material in the ultrasonic machine with the frequency set at 70 kHz, and stirring at room temperature for another 2 h to obtain the high-performance positive electrode material.

The high-performance positive electrode material prepared by this embodiment was used to prepare positive plates, and button half-cells and full-cells were assembled and tested. The processes were the same as in Embodiment 1. The test data are recorded in Table 1.

### Embodiment 4

This embodiment provides a preparation process and performance test for a high-performance positive electrode material. The preparation process specifically comprises the following steps:
(1) placing 42 g of molybdenum powder and 245 g of lithium manganese oxide in a glycol dimethyl ether solution, and putting the mixture in a ball mill set to rotate at 2000 r/min, alternating between forward and reverse rotations, yielding a premixed solution after 5 hours of ball milling at room temperature, the Dᵥ₁₀₀ of the molybdenum powder being 286 nm;
(2) adding 38 g of graphene microspheres to the premixed solution, continuing to disperse evenly in the ball mill at a speed of 1300 r/min, and stirring at room temperature for another 10 hours to obtain a mixed solution;
(3) placing the mixed solution in a rotary furnace, heating to 750°C in an argon atmosphere, maintaining the temperature for 5 hours, and then crushing and screening discharged materials to obtain a precursor material; and
(4) continuing to evenly disperse 2 kg of lithium iron phosphate with the precursor material in the ball mill at a speed of 600 r/min, and stirring at room temperature for another 4 hours to obtain the high-performance positive electrode material.

The high-performance positive electrode material prepared by this embodiment was used to prepare positive plates, and button half-cells and full-cells were assembled and tested. The specific processes were the same as in Embodiment 1. The test data are recorded in Table 1.

### Embodiment 5

This embodiment provides a preparation process and performance test for a high-performance positive electrode material. The preparation process comprises:
(1) placing 60 g of Al-Ni alloy powder and 210 g of lithium hydroxide into a tetrahydrofuran solution, dispersing the mixture in a disperser at a speed of 1100 r/min, and stirring thoroughly at room temperature for 3.5 hours to obtain a premixed solution, the Dᵥ₁₀₀ of the Al-Ni alloy powder being 85 nm;
(2) adding 50 g of single-walled carbon nanotubes to the premixed solution, continuing to disperse evenly in the disperser at a speed of 1390 r/min, and stirring at room temperature for another 7 hours to obtain a mixed solution;
(3) placing the mixed solution in a tube heating furnace, heating to 860°C in an argon atmosphere, maintaining the temperature for 3.5 hours, and then crushing and screening discharged materials to obtain a precursor material; and
(4) continuing to evenly disperse 2 kg of lithium iron phosphate with the precursor material in the disperser at a speed of 900 r/min, and stirring at room temperature for another 0.5 hours to obtain the high-performance positive electrode material.

The high-performance positive electrode material prepared by this embodiment was used to prepare positive plates, and button half-cells and full-cells were assembled and tested. The specific processes were the same as in Embodiment 1. The test data are recorded in Table 1.

### Embodiment 6

This embodiment provides a preparation process and performance test for a high-performance positive electrode material. The preparation process comprises :
(1) placing 37 g of tin powder with 359 g of butyllithium in a dimethylformamide solution, and putting the mixture in an ultrasonic machine with an ultrasonic frequency of 40 kHz, yielding a premixed solution after 5 hours of ultrasonic stirring, the Dᵥ₁₀₀ of the tin powder being 53 nm;
(2) adding 206 g of porous carbon to the premixed solution, and continuing to stir in the ultrasonic machine with the ultrasonic frequency set at 80 kHz, yielding a mixed solution after 10 hours of ultrasonic stirring;
(3) placing the mixed solution in a rotary furnace, heating to 1000°C in an argon atmosphere, maintaining the temperature for 2 hours, and then crushing and screening discharged materials to obtain a precursor material; and
(4) continuing to evenly disperse 2 kg of lithium iron phosphate with the precursor material in the ultrasonic machine with the frequency set at 40 kHz, and stirring at room temperature for another 4 hours to obtain the high-performance positive electrode material.

The high-performance positive electrode material prepared by this embodiment was used to prepare positive plates, and button half-cells and full-cells were assembled and tested. The specific processes were the same as in Embodiment 1. The test data are recorded in Table 1.

### Embodiment 7

This embodiment provides a preparation process and performance test for a high-performance positive electrode material. The preparation process comprises :
(1) placing 40 g of Cu-Sn alloy powder and 457 g of lithium acetate into a glycol dimethyl ether solution, dispersing the mixture in a disperser at a speed of 1400 r/min, and stirring thoroughly at room temperature for 2 hours to obtain a premixed solution, the Dᵥ₁₀₀ of the Cu-Sn alloy powder being 39 nm;
(2) adding 170 g of graphene microspheres to the premixed solution, continuing to disperse evenly in the disperser at a speed of 2000 r/min, and stirring at room temperature for another 2 hours to obtain a mixed solution;
(3) placing the mixed solution in a tube heating furnace, heating to 950°C in an argon atmosphere, maintaining the temperature for 4.5 hours, and then crushing and screening discharged materials to obtain a precursor material; and
(4) continuing to evenly disperse 2 kg of lithium iron phosphate with the precursor material in the disperser at a speed of 700 r/min, and stirring at room temperature for another 5 h to obtain the high-performance positive electrode material.

The high-performance positive electrode material prepared by this embodiment was used to prepare positive plates, and button half-cells and full-cells were assembled and tested. The specific processes were the same as in Embodiment 1. The test data are recorded in Table 1.

### Comparative example 1

This comparative example used lithium iron phosphate, the same positive electrode material as in the embodiments, to prepare positive plates, and button half-cells and full-cells were assembled and tested. The specific processes were the same as in Embodiment 1. The test data are recorded in Table 1.

### Comparative example 2

This comparative example provides a preparation process and performance test for a positive electrode material that is undoped with metal elements but incorporates lithium. The preparation process comprises :
(1) placing 210 g of lithium hydroxide into a tetrahydrofuran solution, dispersing the mixture in a disperser at a speed of 1100 r/min, and stirring thoroughly at room temperature for 3.5 hours to obtain a premixed solution;
(2) adding 50 g of single-walled carbon nanotubes to the premixed solution, continuing to disperse evenly in the disperser at a speed of 1390 r/min, and stirring at room temperature for another 7 hours to obtain a mixed solution;
(3) placing the mixed solution in a tube heating furnace, heating to 860°C in an argon atmosphere, maintaining the temperature for 3.5 hours, and then crushing and screening discharged materials to obtain a precursor material; and
(4) continuing to evenly disperse 2 kg of lithium iron phosphate with the precursor material in the disperser at a speed of 900 r/min, and stirring at room temperature for another 0.5 h to obtain the positive electrode material that is undoped with metal elements but incorporates lithium.

The positive electrode material that is undoped with metal elements but incorporates lithium prepared by this comparative example was used to prepare positive plates, and button half-cells and full-cells were assembled and tested. The specific processes were the same as in Embodiment 1. The test data are recorded in Table 1. Fig. 2 illustrates cycling curves of batteries assembled with a high-performance positive electrode material prepared in Embodiment 1 of the invention, in contrast to batteries assembled with a positive electrode material prepared in Comparative example 2.

The initial efficiency and reversible capacity of the positive electrode materials in Embodiments 1-7 and Comparative examples 1-2 were tested using button cells, and the cycle retention rates at 300 and 600 cycles for full-cells were also measured. The results are shown in Table 1.

**Table 1**

| Number | Initial efficiency% | Initial-cycle charge specific capacity (mAh/g) | Initial-cycle discharge specific capacity (mAh/g) | 600-cycle retention rate% at 1C rate |
|---|---|---|---|---|
| Embodiment 1 | 87.5 | 175.1 | 153.2 | 95.7 |
| Embodiment 2 | 87.2 | 174.9 | 152.5 | 95.4 |
| Embodiment 3 | 87.3 | 175.6 | 153.3 | 96.1 |
| Embodiment 4 | 87.0 | 176.1 | 153.2 | 95.9 |
| Embodiment 5 | 87.2 | 175.3 | 152.9 | 96.0 |
| Embodiment 6 | 87.4 | 175.7 | 153.6 | 96.2 |
| Embodiment 7 | 87.1 | 175.7 | 153.0 | 95.6 |
| Comparative example 1 | 91.4 | 152.1 | 139.0 | 91.1 |
| Comparative example 2 | 91.7 | 144.5 | 132.5 | 90.2 |

Comparing the test data in Table 1, it can be seen that under the same testing conditions, the initial-cycle charge specific capacity and cycle retention rate of the positive electrode materials prepared in Embodiments 1-7 are significantly higher than those of the positive electrode materials in Comparative examples 1-2. This is because Embodiments 1-7 use porous materials as the skeleton, with metal elements and lithium elements distributed within the pores of the porous skeleton material. By utilizing doped nano-metal elements to catalyze lithium-containing compounds that are normally inert at room temperature during the charging process, lithium ions can be completely released, thereby increasing the delithiation capacity of the positive electrode material and enhancing the energy density of batteries. Additionally, the gases produced from the complete catalytic decomposition of the lithium-containing compounds are expelled during battery formation, which addresses the gas generation issue caused by the continuous decomposition of lithium-containing compounds during normal battery operation and enhances the safety performance of batteries. Furthermore, the doped metal elements and porous materials can accelerate the internal conduction rate of lithium ions and improve the conductivity of the positive electrode material, ultimately achieving the goal of enhancing overall battery capacity and cycle life through a safe, low-cost, and simple process.

The above-mentioned specific embodiments further explain the purpose, technical solution and beneficial effects of the present invention in detail. It should be understood that the above are only specific embodiments of the present invention and are not used to limit the scope of protection of the present invention. Any modification, equivalent substitution, improvement, etc. made within the spirit and principles of the present invention should be included in the scope of protection of the present invention.

## Claims

1. A high-performance positive electrode material, wherein the positive electrode material is used in lithium batteries and comprises: porous materials, lithium-containing compounds, metal element nanoparticles, and positive electrode active materials;
the lithium-containing compounds comprise inorganic lithium source materials and/or organic lithium source materials; the inorganic lithium source materials comprise one or more of the following: lithium carbonate, lithium oxide, lithium phosphate, lithium manganate, lithium hydroxide, or lithium iodide; the organic lithium source materials comprise one or more of the following: butyllithium, phenyllithium, dicyclopentadienyllithium, or lithium acetate;
the metal element nanoparticles comprise one or more of the following elements and/or alloys thereof: Al, Ti, Mn, Co, Ni, Cu, Zn, Zr, Mo, Ge, and Sn; a particle size Dᵥ₁₀₀ is smaller than or equal to 500 nm;
during the initial cycle of charging and discharging in lithium batteries, reactive active sites on a surface of the metal element nanoparticles adsorb the inert lithium-containing compounds, causing deformation or breaking of chemical bonds in the lithium-containing materials, which results in a catalytic effect on the lithium-containing compounds; additionally, a specific surface area of the metal element nanoparticles provides active centers for electrocatalytic reactions, enhancing the catalytic effect and collectively promoting complete decomposition of the lithium-containing compounds to release lithium ions, thereby improving the energy density and safety performance of lithium batteries.

2. The high-performance positive electrode material according to claim 1, wherein an average particle size Dᵥ₅₀ of the porous materials is between 100 nm and 100 µm, with pore size distribution between 1 nm and 500 nm, and porosity ranging from 30% to 95%;
a particle size of the lithium-containing compounds is between 0.5 nm and 10 µm; and
a particle size Dᵥ₅₀ of the positive electrode active materials is between 5µm and 20 µm.

3. The high-performance positive electrode material according to claim 1, wherein the porous materials comprise one or more of the following: porous carbon, graphene microspheres, single-walled carbon nanotubes, and multi-walled carbon nanotubes; and
the positive electrode active materials comprise one or more of the following: lithium cobalt oxide, lithium manganese oxide, lithium iron phosphate, lithium nickel cobalt manganese oxide, or lithium nickel cobalt aluminum oxide.

4. The high-performance positive electrode material according to claim 1, wherein a mass of the positive electrode active materials accounts for 80%-99.9% of a total mass of the positive electrode material; and
a total mass of the porous materials, the lithium-containing compounds, and the metal element nanoparticles accounts for 0.1%-20% of the total mass of the positive electrode material.

5. The high-performance positive electrode material according to claim 4, wherein the mass of the positive electrode active materials accounts for 70%-94% of the total mass of the positive electrode material;
the total mass of the porous materials, the lithium-containing compounds, and the metal element nanoparticles accounts for 6%-30% of the total mass of the positive electrode material;
wherein, the porous materials account for 0.5%-15% of the total mass of the positive electrode material, the metal element nanoparticles account for 0.5%-10% of the total mass of the positive electrode material, and the lithium-containing compounds account for 5%-20% of the total mass of the positive electrode material.

6. A preparation method of the high-performance positive electrode material according to any one of claims 1-5, which is a liquid-phase method, comprising:
uniformly dispersing metal element nanoparticles and lithium-containing compounds in organic solvents to obtain a premixed solution;
adding porous materials to the premixed solution and performing thorough and uniform dispersion for 2-10 hours to obtain a mixed solution;
placing the mixed solution in high-temperature furnaces, heating to 600°C-1000°C in an inert atmosphere, maintaining the temperature for 2-10 hours, and then crushing and screening discharged materials to obtain a precursor material; and
placing the precursor material and positive electrode active materials in mixing devices and mixing for 0.5-5 hours until uniformly mixed to obtain the high-performance positive electrode material.

7. The preparation method according to claim 6, wherein the organic solvents comprise one or more of the following: toluene, isopropanol, anhydrous ethanol, dimethylformamide, acetone, glycol dimethyl ether, or tetrahydrofuran.

8. The preparation method according to claim 6, wherein the mixing devices comprise one or more of the following: stirrer, disperser, ball mill, or ultrasonic machine; and
the heating furnaces comprise one or more of the following: box-type heating furnace, tube heating furnace, or rotary furnace.

9. A positive plate, comprising the high-performance positive electrode material according to any one of claims 1-5.

10. A lithium battery, comprising the positive plate according to claim 9.
